# EUROPÄISCHE PATENTSCHRIFT

(11) **EP 3 433 094 B1**
(45) Veröffentlichungstag und Bekanntmachung des Hinweises auf die Patenterteilung: **12.06.2019**
(21) Anmeldenummer: 18714179.1
(22) Anmeldetag: 16.03.2018
(51) Int. Cl.: B32B 5/02, B32B 7/04, B32B 27/06, B32B 27/12, B32B 27/32, B32B 3/26, B32B 7/02, E04D 12/00, B32B 7/05

(54) **UNTERDACHBAHN, INSBESONDERE VORGESEHEN ZUR VERWENDUNG ALS UNTERDECKBAHN UND/ODER UNTERSPANNBAHN**
ROOFING UNDERLAY ESPECIALLY ENVISAGED FOR USE AS UNDER-TILE AND/OR SARKING
MEMBRANE DE SOUS-TOITURE EN PARTICULIER DESTINÉE A S'UTILISER COMME BANDE SOUS-TUILE ET/OU DE REVÊTEMENT INTERIEUR DE TOIT

(30) Priorität: 03.04.2017 DE 102017003213; 06.04.2017 DE 102017003364
(43) Veröffentlichungstag der Anmeldung: 30.01.2019
(73) Patentinhaber: Ewald Dörken AG, 58313 Herdecke (DE)
(72) Erfinder: FLAIG, Ronald, 51373 Leverkusen NRW (DE); BACHON, Thomas, 40597 Düsseldorf NRW (DE)
(74) Vertreter: Von Rohr Patentanwälte Partnerschaft mbB
(86) Internationale Anmeldenummer: PCT/EP2018/056666
(87) Internationale Veröffentlichungsnummer: WO 2018/184815

(56) Entgegenhaltungen:
- DE-A1- 19 904 423
- DE-A1-102015 000 092
- DE-U1- 29 805 622
- US-A1- 2009 223 155
- US-A1- 2012 094 067

## Beschreibung

Die vorliegende Erfindung betrifft eine Unterdachbahn, insbesondere vorgesehen zur Verwendung als Unterdachbahn, mit wenigstens einer außenseitigen Vliesschicht, wenigstens einer innenseitigen Vliesschicht und wenigstens einer mikroporösen Membranschicht auf Basis wenigstens eines polyolefinischen Kunststoffes, wobei die Membranschicht zwischen der außenseitigen Vliesschicht und der innenseitigen Vliesschicht angeordnet ist. Des Weiteren betrifft die vorliegende Erfindung ein Verfahren zur Herstellung einer vorgenannten Unterdachbahn.

Die Begrifflichkeit bzw. Kennzeichnung "außenseitig" gibt hierbei an, dass die Unterdachbahn der Bewitterungsseite zugewandt und insbesondere von der Dachkonstruktion abgewandt ist. Demzufolge bezieht sich die Begrifflichkeit "innenseitig" darauf, dass an dieser Stelle die innenseitige Vliesschicht der Dachkonstruktion zugewandt und der Bewitterungsseite abgewandt ist.

Die mikroporöse Membranschicht der eingangs genannten Unterdachbahn ist auf polyolefinischer Kunststoffbasis ausgeführt. Polyolefine sind Polymere, die aus Alkenen, wie Ethylen, Polypropylen, 1-Buten oder Isobuten, durch Kettenpolymerisation hergestellt werden. Polyolefine sind gesättigte Kohlenwasserstoffe, die mengenmäßig die größte Gruppe der Kunststoffe ergeben. Darüber hinaus sind sie den teilkristallinen Thermoplasten zuzuordnen, wobei sich Thermoplaste insbesondere leicht aufgrund einer möglichen reversiblen Verformung verarbeiten lassen. Zusätzlich zeichnen sich Polyolefine durch eine gute chemische Beständigkeit und besonders gute elektrische Isoliereigenschaften aus.

Im Übrigen bedeutet "mikroporös" im Zusammenhang mit der Membranschicht, dass die Membranschicht mikroskopisch kleine Löcher bzw. Durchbrechungen aufweist, die groß genug ausgebildet sind, dass Wasserdampfmoleküle durch sie hindurch diffundieren können. Gleichzeitig sind diese Löcher bzw. Durchbrechungen jedoch so klein ausgestaltet, dass größere Wassermoleküle, insbesondere Wassermoleküle von Regentropfen, nicht durch die Membranschicht hindurch gelangen können. In diesem Fall gibt die Mikroporösität an, dass die Unterdachbahn gleichzeitig sowohl wasserdicht als auch wasserdampfdurchlässig ausgeführt ist. Die mikroporöse Struktur der Membranschicht wird durch eine spezielle Vorbehandlung erzeugt. So werden dem zu verarbeitenden Kunststoffmaterial Füllstoffe, vorzugsweise Calciumcarbonate und insbesondere Kreidepartikel, zugegeben. Dieses Material wird anschließend zur Herstellung der Membranschicht extrudiert und in einem weiteren Schritt bei hohen Temperaturen mono- oder biaxial gereckt und dann unter Spannung abgekühlt. Durch das Recken reißt die extrudierte Membranschicht insbesondere im Bereich der Füllstoffe auf, wodurch sich die Mikroporösität ergibt.

Die primäre Aufgabe einer derartigen Unterdachbahn, auch als Unterspannbahn und/oder Unterdeckbahn bezeichnet, besteht darin, für ein Dach die Regensicherheit unter der Hartbedachung herzustellen. Bahnen der vorgenannten Art werden im Baubereich eingesetzt und haben insbesondere die Aufgabe, Dachkonstruktionen vor Regen, Feuchtigkeit, Flugschnee und Staub zu schützen. Die Unterdachbahnen werden dabei bevorzugt auf Steildächern, beispielsweise auf Walmdächer oder Kuppelwalmdächer, verwendet.

Gleichzeitig ist es neben dem außenseitigen Feuchtigkeitsschutz erforderlich, dass Wasserdampf, der als Feuchteüberschuss aus der Baufeuchte und/oder aus bewohnten Bereichen des Daches stammen kann, durch die Unterdachbahn nach außen entweichen kann. Dieser Wasserdampf wird dabei an die Umgebung abgegeben, so dass es erforderlich ist, dass Unterdachbahnen eine ausreichende Durchlässigkeit für Wasserdampf aufweisen. Diese Durchlässigkeit wird durch eine selektive Permeabilität sichergestellt, so dass eine Unterdachbahn bei Gewährleistung einer wasserdichten Funktion gleichzeitig wasserdampfdurchlässig ist.

Die selektive Permeabilität bedeutet im vorliegenden Fall, dass eine Diffusionsoffenheit gewährleistet wird. Demzufolge ist die Unterdachbahn gegenüber Wasser beständig bzw. bis zu einer bestimmten Wassersäule dicht. Jedoch kann Wasserdampf aus dem Inneren des Gebäudes, insbesondere aus dem Dachbereich, aufgrund der Diffusionsoffenheit nach außen gelangen. Es ergibt sich bevorzugt keine Beeinträchtigung der Wärmedämmung oder anderer im Inneren des Gebäudes vorhandenen Objekte durch zu hohe Feuchtigkeit.

Würde die Unterdachbahn keine oder eine zu geringe Wasserdampfdurchlässigkeit aufweisen, so könnte ein im Dachbereich vorhandener Feuchtigkeitsüberschuss an der Unterdachbahn kondensieren, so dass insbesondere die Wärmedämmung durchfeuchten könnte und sich damit unter anderem ihre wärmdämmende Funktion verschlechtern würde.

Derartige Unterdachbahnen werden in der Regel für einen längeren Benutzungszeitraum eingesetzt, der sich über mehrere Jahre oder gar Jahrzehnte erstrecken kann. Demzufolge ergeben sich besonders hohe Anforderungen an die Alterungsbeständigkeit, da die Unterdachbahnen Umwelteinflüssen, wie z. B. Temperaturschwankungen, UV-Strahlung, Feuchtigkeit und Staub ausgesetzt sind. Diese Umwelteinflüsse wirken sich dabei insbesondere beschleunigend auf den natürlichen Alterungsprozess der Membranschicht aus und führen zu einem Verlust der mechanischen Eigenschaften, insbesondere der Reißkraft und der Reißdehnung.

Bei einer Freibewitterung sind die Unterdachbahnen einer feuchten Witterung ausgesetzt, die insbesondere den Alterungsprozess beschleunigen kann. Diese Phase der Freibewitterung tritt dann ein, wenn die Unterdachbahnen bereits verlegt sind, das Dach aber noch nicht vollständig oder nur teilweise eingedeckt ist. Vor allem in dieser Zeit ist die Unterdachbahn einer hohen Belastung aufgrund der einfallenden UV-Intensität ausgesetzt.

Um dem Alterungsprozess vorzubeugen, ist es im Stand der Technik bekannt, dass eine Acrylatbeschichtung direkt auf ein außenseitiges Vlies aufgebracht ist. Diese Acrylatbeschichtung schützt dabei insbesondere die Unterdachbahn vor UV-Strahlung. Allerdings weisen derartige Unterdachbahnen eine vergleichsweise geringe Wasserdichtigkeit auf.

Des Weiteren sind Unterdachbahnen mit einer Extrusionsbeschichtung bekannt, wobei beispielsweise eine wasserdampfdurchlässige TPU-Schicht auf ein Vlies aufgebracht wird. Dabei bildet sich ein monolithischer Film, der eine Wasserdichtigkeit mit einer hinreichenden hohen Wassersäule liefert. Allerdings zeigen derartige Unterdachbahnen eine mangelnde Widerstandsfähigkeit gegen UV-Strahlung und Hydrolyse. Selbiges gilt, wenn die Funktionsschicht als mikroporöse Folie, z. B. aus Polypropylen, ausgebildet ist.

DE19754251 offenbart eine Unterdachbahn mit einer außenseitigen Vliesschicht, einer innenseitigen Vliesschicht und zweier mikroporösen Membranschichten auf Basis eines polyolefinischen Kunststoffes, wobei die zwei Membranschichten zwischen der außenseitigen Vliesschicht und der innenseitigen Vliesschicht angeordnet sind, und wobei die zwei Membranschichten durch eine Trennlage getrennt sind, beispielsweise aus Polyurethan oder aus Polyetherblockamid, wobei die Trennlage wasserdampfdurchlässig und wasserdicht ist.

Im Ergebnis weisen die bekannten Unterdachbahnen entweder eine hohe Altersbeständigkeit oder eine gute Wasserdichtigkeit auf.

Aufgabe der vorliegenden Erfindung ist es nun, dem vorgenannten Problem zu begegnen, in dem eine Unterdachbahn bereitgestellt wird, die sowohl einen hohen Widerstand gegen das Durchdringen von Wasser als auch eine hohe Wasserdampfdurchlässigkeit bei gleichzeitig verbesserter Alterungsbeständigkeit aufweist.

Erfindungsgemäß wird die vorgenannte Aufgabe bei einer Unterdachbahn der eingangs genannten Art zumindest im Wesentlichen dadurch gelöst, dass wenigstens eine weitere mikroporöse Membranschicht auf polyolefinischer Kunststoffbasis zwischen der außenseitigen Vliesschicht und der innenseitigen Vliesschicht vorgesehen ist und dass die weitere Membranschicht von der Membranschicht durch eine Trennlage getrennt ist, wobei die Trennlage wasserdurchlässig und/oder als Gebilde aus Fasern, insbesondere Vlies, ausgebildet ist.

Im Zusammenhang mit dem Zustandekommen der vorliegenden Erfindung ist erkannt worden, dass der Alterungsprozess bei der Unterdachbahn bei der der Witterung zugewandten äußeren Membranoberfläche beginnt. Darüber hinaus wurde festgestellt, dass, sofern lediglich eine Membranschicht mit einer Schichtdicke verwendet wird, die der Schichtdicke der bei der Unterdachbahn erfindungsgemäß vorgesehenen Membranschichten entspricht, diese dickere Membranschicht eine geringere Beständigkeit gegen den Alterungsprozess aufweist, als sich dies bei Aufteilung in wenigstens zwei Membranschichten ergibt. Ergänzend ist festgestellt worden, dass es noch nicht einmal erforderlich ist, dass die beiden erfindungsgemäß aufgeteilten Membranschichten zwingend die gleiche Schichtdicke in der Summe aufweisen müssen, als eine einzelne Membranschicht mit vergrößerter Dicke. Die Aufteilung als solches führt auch bei einer verringerten Schichtdicke zu einer Verbesserung der Beständigkeit gegen den Alterungsprozess. Im Übrigen gewährleisten die beiden erfindungsgemäß voneinander getrennten Membranschichten eine sehr hohe Wasserdichtigkeit und bieten im Übrigen eine hohe Wasserdampfdurchlässigkeit. Im Übrigen ist erfindungsgemäß auch festgestellt worden, dass die Membranfunktionen der Wasserdichtigkeit über einen deutlich längeren Zeitraum als bei Verwendung einer einzelnen homogenen Membranschicht gleicher Schichtdicke erzielt werden kann.

Um den erfindungsgemäßen Effekt zu erreichen, ist es erforderlich, die beiden Membranschichten voneinander räumlich zu trennen bzw. zu entkoppeln. Erfindungsgemäß gelingt dies dadurch, dass eine Trennlage zwischen den Membranschichten vorhanden ist. Weiterhin hat sich mit dem Zustandekommen der Erfindung gezeigt, dass die äußere, der Witterung zugewandte Membranschicht den Alterungserscheinungen stärker unterliegt, was die Wasserdichtigkeit dieser Schicht beeinträchtigt. Trotz dieser Beeinträchtigung schützt die äußere Membranschicht die darunterliegende weitere Membranschicht, die der innenseitigen Vliesschicht zugewandt ist, vor alterungsaktiven Umwelteinflüssen. Die der außenseitigen Vliesschicht und der Bewitterung zugewandte Membranschicht stellt eine sogenannte "Opferschicht" dar. Die der innenseitigen Vliesschicht zugewandte Membranschicht stellt dabei die entscheidende wasserdichte und wasserdampfdurchlässige Funktion für die Unterdachbahn über einen sehr langen Benutzungszeitraum, vorzugsweise über mehr als 15 Jahre, sicher.

Die Trennlage ist wasserdurchlässig ausgebildet, wobei unter "wasserdurchlässig" im Sinne der vorliegenden Erfindung eine Durchlässigkeit und/oder Permeabilität für Wasser im flüssigen Aggregatzustand verstanden wird. Insbesondere ist die Trennlage auch permeabel bzw. durchlässig für Wasser im gasförmigen Aggregatzustand, das heißt also letztlich wasserdampfdurchlässig. Zudem kann die Trennlage auch permeabel und/oder durchlässig für Luft ausgebildet sein.

Darüber hinaus kann die Trennlage zusätzlich oder alternativ als Gebilde aus Fasern, vorzugsweise Vlies, ausgebildet sein. Die Fasern können eine begrenzte Länge aufweisen und/oder als Endlosfasern bzw. Filamente und/oder als geschnittene Garne jeglicher Art und jeglichen Ursprungs ausgebildet sein, die zu einem Vlies - Faserschicht und/oder Faserflor - zusammengefügt und/oder miteinander verbunden sind.

Vorzugsweise ist die Trennlage nicht als Membranschicht bzw. membranschichtfrei ausgebildet, wobei unter einer Membranschicht im Sinne der vorliegenden Erfindung sowohl eine wasserdampfdurchlässige als auch wasserdichte Schicht verstanden werden kann. Insbesondere ist die Trennlage nicht wasserdicht ausgebildet.

Als Trennlage kann auch ein, insbesondere perforierter und/oder offenporiger, Schaum und/oder Schaumschicht und/oder Gelege und/oder ein, insbesondere fadenförmig, faserförmig und/oder rasterförmig aufgebrachter und/oder applizierter, Klebstoff vorgesehen sein. Als Gelege sind monoaxiale, unidirektionale, biaxiale und/oder multiaxiale Gelege verwendbar. Darüber hinaus kann auch ein Gewebe als Trennlage verwendet werden.

Sofern die Trennlage als, insbesondere fadenförmig, faserförmig und/oder rasterförmig aufgebrachter und/oder applizierter, Klebstoff ausgebildet ist, so dient er insbesondere neben der Entkopplung der Membranschicht und der weiteren Membranschicht auch zur, insbesondere stoffschlüssigen, Verbindung der Membranschichten - letztlich zur Verklebung der Membranschichten.

Bei Langzeitversuchen mit der erfindungsgemäßen Unterdachbahn ist im Übrigen festgestellt worden, dass diese auch nach Voranschreiten des natürlichen Alterungsprozesses der oberseitigen Membranschicht keinen Verlust der mechanischen Eigenschaften, insbesondere der Reißkraft und der Reißdehnung, zeigt.

Zusätzlich ist die Herstellung einer erfindungsgemäßen Unterdachbahn deutlich kostengünstiger als die Herstellung einer Unterdachbahn, die eine monolithische Membranschicht aufweist.

In durchgeführten Versuchen konnte weiter festgestellt werden, dass sich die Widerstandsfähigkeit gegen den Alterungsprozess der erfindungsgemäßen Unterdachbahn um mehr als 100% gegenüber dem aus dem Stand der Technik bekannten Unterdachbahnen verbessern lässt. Dabei wurde insbesondere die Widerstandsfähigkeit gegen UV-Licht und/oder Witterungseinflüsse getestet. Gleichzeitig konnte die hohe Wasserdichtigkeit beibehalten, sogar um bis zu 100% gesteigert werden.

Darüber hinaus wurde bei Versuchen festgestellt, dass vor allem die Verwendung von zwei Membranschichten, die untereinander durch eine Trennlage entkoppelt sind, eine ausgezeichnete Widerstandsfähigkeit gegen den Alterungsprozess aufweist.

Im Zusammenhang mit der vorliegenden Erfindung ist es so, dass grundsätzlich eine Mehrzahl weiterer Membranschichten vorhanden sein können. Im Ergebnis können also mehr als zwei Membranschichten vorgesehen sein. Werden mehr als zwei Membranschichten vorgesehen, befindet sich zwischen zwei benachbarten Membranschichten jeweils eine weitere Trennlage. Auch bei der Verwendung einer Vielzahl von Membranschichten, vorzugsweise zwischen drei bis fünf Membranschichten, konnte festgestellt werden, dass eine eine Mehrzahl von Membranschichten aufweisende erfindungsgemäße Unterdachbahn im Vergleich zu einer eine einzelne Membranschicht aufweisende Unterdachbahn, die die Summe der Dicken der einzelnen Membranschichten als Dicke der einzelnen Membranschicht aufweist, eine verbesserte Alterungsbeständigkeit zeigt.

Die weitere Trennlage ist ebenfalls wasserdurchlässig und/oder als Gebilde aus Fasern, insbesondere Vlies, ausgebildet. Bevorzugt weist die weitere Trennlage zumindest im Wesentlichen die gleichen Eigenschaften wie die Trennlage auf. Insbesondere ist die weitere Trennlage zumindest im Wesentlichen identisch zu der Trennlage ausgebildet.

Bei einer weiteren vorteilhaften Ausgestaltung des Erfindungsgedankens ist die Verwendung von Polypropylen (PP) und/oder Polyethylen (PE) als Basis für das Material der Membranschicht vorgesehen. Dabei sind Polypropylene (PP) und Polyethylene (PE) den Polyolefinen zuzuordnen.

Im Übrigen hat sich in durchgeführten Versuchen gezeigt, dass es bei einer besonders bevorzugten Ausgestaltungsform der vorliegenden Erfindung die Membranschicht eine Dicke im Bereich von 20 bis 200 µm, bevorzugt zwischen 30 und 120 µm, weiter bevorzugt zwischen 35 und 100 µm, aufweist.

Diese Dicke der Membranschicht bezieht sich dabei auf die Dicke einer einzelnen Membranschicht, wobei es sich versteht, dass mehrere Membranschichten, wenigstens zwei, in dem erfindungsgemäßen Aufbau der Unterdachbahn verwendet werden. Dabei weisen die Membranschichten bei einer weiteren vorteilhaften Ausführungsvariante ein Flächengewicht zwischen 15 und 150 g/m², bevorzugt zwischen 20 und 100 g/m², weiter bevorzugt zwischen 20 und 50 g/m², auf.

Darüber hinaus wurde bei einer durchgeführten Versuchsreihe deutlich, dass es besonders vorteilhaft ist, wenn die Membranschichten unterschiedlich ausgeführt sind, wobei sie dann insbesondere eine unterschiedliche Dicke und/oder ein unterschiedliches Material aufweisen. Dabei versteht es sich letztlich, dass es erfindungsgemäß auch vorgesehen sein kann, dass die Membranschichten denselben Aufbau bzw. dieselbe Dicke aufweisen können.

Als eine besonders vorteilhafte Ausführungsvariante stellte sich heraus, dass die Dicke der der außenseitigen Vliesschicht zugewandten Membranschicht größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der innenseitigen Vliesschicht zugewandten Membranschicht ausgebildet ist. Dabei bedeuten im vorliegenden Fall die Prozentangaben, dass bei einer um bis zu 100 % größeren Membranschicht diese die zweifache bzw. doppelte Dicke der der innenseitigen Vliesschicht zugewandten Membranschicht aufweist. Die doppelt so dicke Ausführungsform der der außenseitigen Vliesschicht zugewandten Membranschicht führt zu einer deutlichen Verbesserung der Widerstandsfähigkeit gegen den Alterungsprozess, wobei sich durch die erfindungsgemäße unterschiedliche Ausgestaltung der Membranschichten eine Verbesserung um bis zu 10 % im Vergleich zur Ausführung zweier gleich dicker Membranschichten ergibt.

Darüber hinaus wurde auch festgestellt, dass es ebenfalls besonders vorteilhaft ist, wenn die Dicke der der innenseitigen Vliesschicht zugewandten Membranschicht größer, bevorzugt zwischen 50 % bis 200 %, weiter bevorzugt bis 70 %, weiter bevorzugt bis 85 % und insbesondere zumindest im Wesentlichen bis zu 100 %, als die Dicke der der außenseitigen Vliesschicht zugewandten Membranschicht ausgebildet ist. Bei der zweifach so großen bzw. dicken Ausführung (Steigerung um 100 %) der der innenseitigen Vliesschicht zugewandten Membranschicht im Vergleich zu der der außenseitigen Vliesschicht zugewandten Membranschicht ist eine Steigerung der Beständigkeit gegenüber UV-Strahlen um mehr als 70 % im Vergleich zu einer einzelnen Membranschicht, die die Dicke der beiden einzelnen Membranschichten aufweist, erreicht worden. Letztlich ist die Wahl, ob die außenliegende oder die innenliegende Membranschicht dicker ist als die andere Membranschicht oder aber ob beide Membranschichten gleich dick sind, von den jeweiligen Einsatzbedingungen abhängig. Gleiches gilt für den Fall, dass die beiden Membranschichten nicht aus dem gleichen sondern aus einem unterschiedlichen Material bestehen.

Unabhängig von der Auswahl und Ausgestaltung des Materials und/oder der Dicke der eingesetzten Membranschichten ist zu berücksichtigen, dass mit steigender Schichtdicke der jeweiligen Membranschicht eine Erhöhung der Widerstandsfähigkeit gegen den Alterungsprozess einhergeht. Allerdings muss auch berücksichtigt werden, dass bei steigender Schichtdicke insbesondere die Wasserdampfdurchlässigkeit sinkt. Von daher muss für den jeweiligen Einsatzfall das Optimum zwischen gleichzeitig sehr hoher Wasserdampfdurchlässigkeit bei einer ausgezeichneten Beständigkeit gegen den Alterungsprozess gefunden werden.

Die außenseitige Vliesschicht dient als Träger- und Schutzschicht für die darauffolgende Membranschicht. Sie kann auch eine erste Barriere zum Schutz vor UV-Strahlen sein.

Bei einer vorteilhaften Ausgestaltung des Erfindungsgedankens ist vorgesehen, dass ein Flächengewicht der außenseitigen Vliesschicht zwischen 20 bis 200 g/m², bevorzugt zwischen 30 bis 140 g/m², weiter bevorzugt zwischen 40 bis 100 g/m², weiter bevorzugt weiter zwischen 50 bis 80 g/m² und insbesondere zumindest im Wesentlichen kleiner oder gleich 70 g/m², vorgesehen ist. Dabei wurde in den durchgeführten Versuchen festgestellt, dass sich das Optimum zwischen den zu realisierenden Eigenschaften bei 70 g/m² ergibt.

Bei einer weiteren vorteilhaften Ausgestaltung ist vorgesehen, dass die innenseitige Vliesschicht ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist. Folglich ist es besonders vorteilhaft, wenn bei einer Außenschicht, die ein Flächengewicht von vorzugsweise 70 g/m² aufweist, eine innenseitige Vliesschicht, die insbesondere ein geringeres Flächengewicht von bevorzugt 20 g/m² aufweist, verwendet wird. Das verringerte Flächengewicht der innenseitigen Vliesschicht ergibt sich, wie erfindungsgemäß festgestellt worden ist, dadurch, dass bei der innenliegenden Anordnung der innenseitigen Vliesschicht nur eine geringere Schutzfunktion als bei der außenseitigen Vliesschicht erforderlich ist. Die erfindungsgemäße Ausgestaltung gewährleistet letztlich einen geringeren Materialverbrauch und führt damit auch zu einer vom Flächengewicht her leichteren bzw. dünneren Unterdachbahn.

Darüber hinaus ist bei einer weiteren bevorzugten Ausführungsform der Unterdachbahn vorgesehen, dass die Trennlage ebenfalls als Vliesschicht ausgebildet ist. Vorzugsweise weist dabei die Trennlage ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², auf.

Ferner kann bei einer weiteren bevorzugten Ausführungsform vorgesehen sein, dass die Trennlage als, insbesondere perforierter und/oder offenporiger, Schaum und/oder Schaumschicht, als Gelege, als Gewebe und/oder als, insbesondere fadenförmig, faserförmig und/oder rasterförmig aufgebrachter und/oder applizierter, Klebstoff ausgebildet ist. Vorzugsweise weist dabei die Trennlage ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², auf.

Im Übrigen ist bei einer besonders bevorzugten Ausführungsform der Unterdachbahn vorgesehen, dass die Unterdachbahn mit ihrem Gesamtaufbau, also der äußeren und inneren Vliesschicht, den beiden Membranen und der Trennlage, insgesamt selektiv permeabel ausgebildet ist. Die selektive Permeabilität wirkt sich bei der Unterdachbahn dahingehend aus, dass diese insbesondere wasserdicht ist, bei gleichzeitig gewährleisteter Wasserdampfdurchlässigkeit. Die Wasserdichtigkeit zeigt sich insbesondere dadurch, dass die Dichtigkeit bei einer Wassersäule zwischen 0,8 bis 40 m, bevorzugt zwischen 0,9 bis 30 m, weiter bevorzugt zwischen 1 bis 20 m, vorhanden ist.

Zur Beurteilung der Wasserdichtigkeit von Unterdachbahnen sind die DIN 1928 und die DIN 20811 heranzuziehen. Diese DIN-Normen zeigen Prüfungsbedingungen bzw. Bestimmungsverfahren zur Bestimmung der Wasserdichtigkeit. Die Wasserdichtigkeit bestimmt dabei maßgeblich den Einsatz der Unterdachbahn, da diese besonders auf Dächern bei einer freien Bewitterung Feuchtigkeit und evtl. Schlagregen ausgesetzt sind. Alle vorgenannten Wassersäulen entsprechen einen hohen Widerstand gegen den Wasserdurchgang gemäß der DIN 20811.

Des Weiteren ist bei einer besonders vorteilhaften Ausgestaltung die Unterdachbahn so ausgestaltet, dass sie eine wasserdampfdiffusionsäquivalente Luftschichtdicke (s_{d}-Wert) zwischen 0,01 bis 1 m, bevorzugt zwischen 0,02 bis 0,5 m, weiter bevorzugt zwischen 0,03 bis 0,3 m und insbesondere zumindest im Wesentlichen kleiner oder gleich 0,05 m, vorsieht. Die Diffusionsoffenheit der Unterdachbahn ermöglicht es erst, dass Feuchtigkeit aus dem Inneren des Gebäudes durch die erfindungsgemäße Unterdachbahn entweichen kann. Dabei charakterisiert der S_{d}-Wert den Wasserdampfdiffusionswiderstand. Die Diffusionsoffenheit definiert das Gegenteil einer Dampfsperre, wobei die Dampfsperre einen hohen Feuchtigkeitsschutz für eine Untergrundfläche, auf der sie verlegt ist, gewährleistet. Die Bestimmung des s_{d}-Wertes ist über die DIN 4108 (Wärmeschutz im Hochbau) durch den dritten Teil (klimabedingter Feuchteschutz; Anforderung, Berechnungsverfahren und Hinweise für Planung und Ausführung) geregelt. Die DIN 4108-3 definiert als Grenzwert für eine Diffusionsoffenheit einen s_{d}-Wert von kleiner als 0,5 m. Demzufolge ist die Unterdachbahn bevorzugt so auszuführen, dass sie eine besonders hohe Diffusionsoffenheit gewährleistet.

Ein weiterer vorteilhafter Aspekt der vorliegenden Erfindung liegt darin, dass die Vliesschicht und/oder die Trennlage bzw. deren Fasern einen, bevorzugt thermoplastischen, Kunststoff, insbesondere Polyester (PES) und/oder Polyethylen (PE) und/oder Polypropylen (PP) und/oder Polyethylenterephthalat (PET), aufweist, insbesondere aus einem solchen besteht. Thermoplastische Kunststoffe ermöglichen dabei insbesondere, dass eine möglichst geringe Schichtdicke bei gleichzeitigem Schutz der Membranschichten gewährleistet werden kann. Die Ausführung der Trennlage als Vliesschicht ergibt dabei nicht nur einen Schutz für die jeweils darunter liegende Membranschicht in Bezug zu der Bewitterungsseite, sondern sie entkoppelt auch die Membranschichten untereinander, so dass die Ausführungsform der Vliesschicht, die einen thermoplastischen Kunststoff aufweist, besonders hohe Entkopplungseigenschaften realisiert. Diese hohen Entkopplungseigenschaften bedingen erst, dass die erfindungsgemäße Bestimmung der der außenseitigen Vliesschicht zugewandten Membranschicht als sogenannte "Opferschicht" möglich ist.

Im Übrigen ist es bei einer besonders bevorzugten Ausgestaltung der Unterdachbahn vorgesehen, dass die Membranschicht mit der innenseitigen und/oder der außenseitigen Vliesschicht fest verbunden ist. Diese Verbindung wird dabei bevorzugt durch Ultraschallschweißen, insbesondere mit punktuellen Schweißpunkten, und/oder über eine Klebeverbindung bzw. über Kleben, insbesondere über eine punktuelle teilflächige Verklebung, und/oder über Wärmekalandrieren durchgeführt. Zur Verbindung aller Schichten untereinander ist es jedoch nicht ausreichend, lediglich die Membranschicht mit der außen- und/oder innenseitigen Vliesschicht zu verbinden, denn es sind wenigstens zwei Membranschichten bei der erfindungsgemäßen Unterdachbahn vorgesehen, so dass auch die Membranschichten, die voneinander mittels einer Trennlage getrennt werden, verbunden werden. Dabei wird bevorzugt die Membranschicht jeweils über die Trennlage mit der unmittelbar benachbarten Membranschicht verbunden, wobei diese Verbindung mittels Ultraschallschweißen, insbesondere mit punktuellen Schweißpunkten und/oder über Kleben, insbesondere über eine punktuelle teilflächige Verklebung, und/oder über Wärmekalandrieren realisiert wird. Die feste Verbindung der Membranschichten untereinander führt insbesondere dazu, dass die Unterdachbahn insgesamt eine hohe Reißfestigkeit aufweist. Darüber hinaus wird durch eine Verbindung der einzelnen Schichten untereinander vorzugsweise gewährleistet, dass sich die Schichten nicht gegeneinander verschieben können. Insbesondere durch die Verbindung kann die Unterdachbahn in einfacher Weise aufgerollt und somit zum Transport und/oder Versand bereitgestellt werden.

Ist die Trennlage als Klebstoff und/oder als Klebeschicht, vorzugsweise fadenförmig, faserförmig und/oder rasterförmig aufgebrachter und/oder applizierter Klebstoff, ausgebildet, so kann die Trennlage selbst zur festen Verbindung der Membranschichten mit der Trennlage und letztlich auch zur festen Verbindung der Membranschichten untereinander beitragen und/oder diese Verbindung gewährleisten.

Zur Verlegung auf einer Dachfläche wird jedoch nicht nur ein fester Verbund der einzelnen Schichten untereinander benötigt, sondern auch insbesondere eine Verbindung, vorzugsweise wasserdicht, einzelner Unterdachbahnen zueinander. Vorzugsweise ist für diese Verbindung vorgesehen, dass an wenigstens einem Rand unter- und/oder oberseitig ein Klebebereich in die bzw. an der Unterdachbahn ein- bzw. angebracht ist. Dabei versteht es sich, dass wenigstens ein Klebebereich an einem Längsrand vorgesehen ist. Dabei gibt es ganz unterschiedliche Möglichkeiten der Anordnung eines Klebebereichs. So ist es grundsätzlich möglich, dass überhaupt nur an einem Längsrand ein Klebebereich vorgesehen ist. Bei einer alternativen Ausführungsform ist an einem Längsrand ober- und unterseitig ein Klebebereich vorgesehen. Bei einer anderen Ausführungsform sind auf gegenüberliegenden Längsrändern jeweils auf gleichen Seiten jeweils ein Klebebereich vorgesehen, während bei einer anderen Ausführungsform an gegenüberliegenden Längsrändern auf gegenüberliegenden Seiten Klebebereiche vorgesehen sind. Auch ist es grundsätzlich möglich, dass an beiden Längsrändern ober- und unterseitig Klebebereiche vorgesehen sind. Durch die Klebebereiche kann letztlich die Regensicherheit erhöht und eine Winddichtigkeit der Verbindung von zwei benachbarten Unterdachbahnen im Randbereich realisiert werden.

Die Klebebereiche sind dabei vorzugsweise streifenförmig, gegebenenfalls mit unterbrochenen Streifen, ausgebildet. Sie sind längsrandseitig angeordnet und können darüber hinaus auch lediglich punktuell aufgetragen sein. Die Klebebereiche sind dabei bevorzugt abgedeckt mit einem Liner, vorzugsweise ein silikoniertes Papier und/oder eine silikonierte Folie.

Darüber hinaus betrifft die vorliegende Erfindung ein Verfahren zur Herstellung einer Unterdachbahn mit wenigstens einer außenseitigen Vliesschicht, mit wenigstens einer innenseitigen Vliesschicht und mit wenigstens einer mikroporösen Membranschicht auf Basis polyolefinischer Kunststoffe. Die Membranschicht ist dabei zwischen der außenseitigen Vliesschicht und der innenseitigen Vliesschicht angeordnet.

Erfindungsgemäß ist bei dem vorgenannten Verfahren vorgesehen, dass wenigstens eine weitere mikroporöse Membranschicht auf polyolefinischer Kunststoffbasis zwischen der außenseitigen Vliesschicht und der innenseitigen Vliesschicht eingebracht wird und dass die weitere Membranschicht von der Membranschicht durch eine Trennlage getrennt wird, wobei die Trennlage wasserdurchlässig und/oder als Gebilde aus Fasern, insbesondere Vlies, ausgebildet ist.

Bei einer bevorzugten Verfahrensausgestaltung ist vorgesehen, dass unmittelbar benachbarte Membranschichten untereinander über Trennlagen verbunden werden, wobei zur Verbindung verschiedene Verfahren benutzt werden können. Vorzugsweise wird Ultraschallschweißen, insbesondere über punktuelle teilflächige Schweißpunkte, verwendet. Das Ultraschallschweißen ist ein Verfahren zum Fügen von thermoplastischen Kunststoffen und metallischen Werkstoffen. Die Verschweißung wird dabei durch eine hochfrequente mechanische Schwingung, insbesondere im Bereich zwischen 20-30 kHz, erreicht. Bei der Verschweißung wird zwischen den zu verschweißenden Membranschichten durch Erwärmung durch Molekular- und Grenzflächenreibung eine Verbindung realisiert. Das Ultraschallschweißen ist der Gruppe der Reibschweißungen zuzuordnen. Neben punktförmigen Schweißungen sind auch Nahtschweißungen möglich. Eine stoffschlüssige Verbindung der Membranschicht zur Trennlage wird insbesondere durch Kleben gewährleistet. Die Verklebung wird dabei bevorzugt punktuell teilflächig aufgetragen. Eine weitere bevorzugte Methode der Verbindung der Membranschichten zur Trennlage wird durch Wärmekalandrieren bereitgestellt. Das Kalandrieren bzw. Wärmekalandrieren wird dabei mittels eines Kalanders - ein System aus mehreren einander zugeordneten beheizten und polierten Walzen - durchgeführt.

Wird die Trennlage auf die Membranschicht und/oder die weitere Membranschicht als Klebstoff, insbesondere fadenförmig, faserförmig und/oder rasterförmig, aufgebracht und/oder appliziert, dann kann zur Verklebung der Trennlage mit den Membranschichten die Trennlage selbst verwendet werden, die dann letztlich den Kleber darstellt und eine, vorzugsweise feste und/oder stoffschlüssige, Verbindung der Trennlage zu den Membranschichten gewährleistet.

Bei einer weiteren besonders bevorzugten Ausgestaltung des Erfindungsgedankens ist vorgesehen, dass zuerst ein wenigstens dreischichtiger Aufbau aus einer außenseitigen Vliesschicht, einer Membranschicht und einer Trennlage, insbesondere durch Kalandrieren und/oder Ultraschallschweißen, gebildet wird. Zusätzlich ist vorzugsweise vorgesehen, dass ein eine innenseitige Vliesschicht und eine Membranschicht aufweisender wenigstens zweischichtiger Aufbau, insbesondere mittels Ultraschallschweißen, hergestellt wird. Folglich liegt ein wenigstens dreischichtiger Aufbau und ein wenigstens zweischichtiger Aufbau vor, der jeweils außenseitig ein Vlies aufweist. Diese beiden Schichtaufbauten werden anschließend miteinander verbunden, insbesondere durch eine punktuelle teilflächige und/oder vollflächige Verklebung, wobei die Membranschicht des wenigstens zweischichtigen Aufbaus der Trennlage des wenigstens dreischichtigen Aufbaus zugewandt ist. Dabei versteht es sich, dass in dem wenigstens zweischichtigen und/oder dreischichtigen Aufbau eine Mehrzahl von Membranschichten mit jeweils zugehörigen Trennlagen vorgesehen sein können. Als Klebemittel eignet sich dabei insbesondere ein Schmelzklebstoff (Hotmelt) oder ein Dispersionsklebstoff.

Im Übrigen ist vorteilhafterweise das Ultraschallschweißen mittels Sonotroden durchzuführen, die insbesondere punktuelle Schweißungen bzw. Schweißpunkte erzeugen. Sonotroden sind Werkzeuge, die durch das Einleiten von hochfrequenten mechanischen Schwingungen - Ultraschall - in Resonanzschwingungen versetzt werden. Sie stellen im Ultraschallschweißen die Möglichkeit dar, eine dauerhafte Verbindung zwischen einzelnen Schichten bzw. Bauteilen herzustellen. Die Füge- und/oder Kontaktzonen werden dabei aufgrund verschiedener Prozesse dauerhaft verbunden. Es können verschiedene Geometrien für die Sonotrode verwendet werden. Die Sonotrode hat insbesondere einen direkten Kontakt zu der zu verschweißenden Membranschicht und/oder Vliesschicht.

Im Ergebnis betrifft die Erfindung eine Unterdachbahn, die vorzugsweise als Unterspannbahn und/oder Unterdeckbahn verwendet wird. Die Unterdachbahn weist dabei einen wenigstens fünfschichtigen Schichtaufbau auf. Die erfindungsgemäße Unterdachbahn weist eine besonders hohe Altersbeständigkeit auf, wobei sie gleichzeitig auch über einen längeren Benutzungszeitraum ihre wasserdichte und wasserdampfdurchlässige selektive Permeabilität beibehält.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von Ihrer Zusammenfassung in den Ansprüchen oder deren Rückbeziehung.

Es zeigt
- Fig. 1: eine schematische Querschnittsansicht einer erfindungsgemäßen Unterdachbahn,
- Fig. 2: eine schematische Querschnittsansicht einer weiteren Ausführungsform einer erfindungsgemäßen Unterdachbahn,
- Fig. 3: eine schematische Querschnittsansicht einer weiteren Ausführungsform einer erfindungsgemäßen Unterdachbahn,
- Fig. 4: eine schematische Querschnittsansicht einer weiteren Ausführungsform einer erfindungsgemäßen Unterdachbahn,
- Fig. 5: eine schematische Draufsicht auf eine erfindungsgemäße Unterdachbahn,
- Fig. 6: eine schematische perspektivische Ansicht der erfindungsgemäßen verlegten Unterdachbahn bei Verwendung als Unterspannbahn,
- Fig. 7: eine schematisch perspektivische Ansicht der erfindungsgemäßen Unterdachbahn bei Verwendung als Unterspannbahn,
- Fig. 8: eine schematische Querschnittsansicht der Vorprodukte der erfindungsgemäßen Unterdachbahn vor Zusammenfügung.

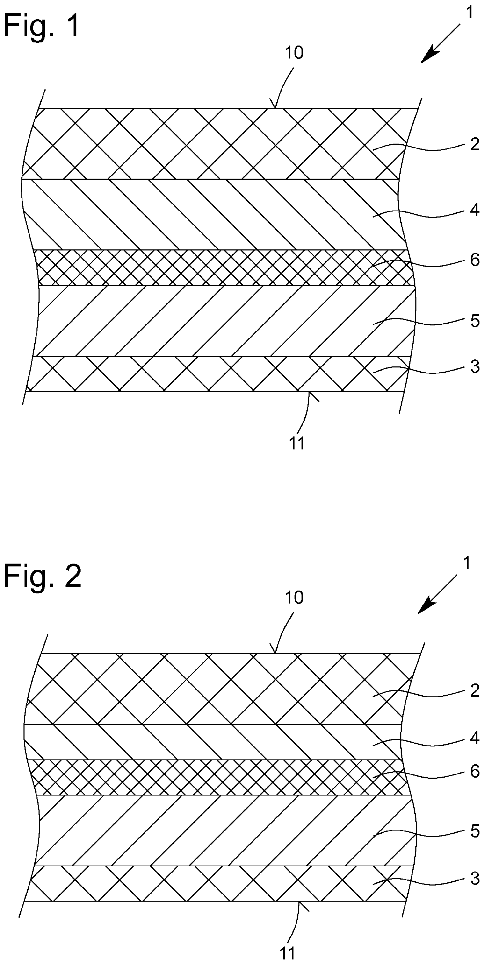

Die in Fig. 1 gezeigte Unterdachbahn 1 weist eine außenseitige Vliesschicht 2 und eine innenseitige Vliesschicht 3 auf. Zwischen der innenseitigen Vliesschicht 3 und der außenseitigen Vliesschicht 2 ist eine mikroporöse Membranschicht 4 auf Basis eines polyolefinischen Kunststoffes angeordnet. Zwischen der außenseitigen Vliesschicht 2 und der innenseitigen Vliesschicht 3 ist neben der ersten Membranschicht 4 eine weitere Membranschicht 5 vorgesehen. Die beiden Membranschichten 4, 5 sind untereinander durch eine Trennlage 6 getrennt.

Die Trennlage 6 ist in der dargestellten Ausführungsform wasserdurchlässig - das heißt nicht wasserdicht - ausgebildet. Zudem ist in den dargestellten Ausführungsformen vorgesehen, dass die Trennlage 6 als Gebilde aus Fasern ausgebildet ist, wobei als Gebilde ein Vlies vorgesehen ist. In weiteren nicht dargestellten Ausführungsformen ist als Trennlage 6 eine wasserdurchlässige und/oder membranschichtfreie Schicht oder ein Gebilde aus Fasern vorgesehen. Des Weiteren ist die Trennlage 6 in den dargestellten Ausführungsformen luft- und wasserdampfdurchlässig ausgebildet.

Nicht dargestellt ist, dass die Trennlage 6 als, insbesondere perforierter und/oder offenporiger, Schaum und/oder Schaumschicht und/oder als Gelege und/oder als Gewebe und/oder als, insbesondere fadenförmig, faserförmig und/oder rasterförmig aufgebrachter und/oder applizierter, Klebstoff ausgebildet ist.

Hinzuweisen ist darauf, dass sowohl die außenseitige Vliesschicht 2 als auch die innenseitige Vliesschicht 3 jeweils als solche nicht einschichtig ausgebildet sein müssen. Die außenseitige Vliesschicht 2 und/oder die innenseitige Vliesschicht 3 können jeweils grundsätzlich auch mehrschichtig ausgebildet sein. Nachfolgend wird aber von einer jeweils einschichtigen Ausbildung der Vliesschichten 2, 3 ausgegangen.

Die außenseitige Vliesschicht 2 weist die Außenseite 10 der Unterdachbahn 1 auf. Demgemäß weist die innenseitige Vliesschicht 3 an ihrer Außenseite die Innenseite 11 der Unterdachbahn 1 auf. Die Außenseite 10 der Unterdachbahn 1 ist dabei der Bewitterungsseite zugewandt und die Innenseite 11 der Unterdachbahn 1 ist der Untergrundfläche bzw. dem Dachunterbau zugewandt. Die mikroporöse Membranschicht 4, 5 weist mikroskopisch kleine Löcher/Öffnungen auf, die so ausgestaltet sind, dass Wasserdampfmoleküle durch sie hindurchdiffundieren können, die jedoch so klein sind, dass Wasser im flüssigem Aggregatzustand nicht durch sie hindurchgelangen können. Eine mikroporöse Membranschicht 4, 5 ist demgemäß diffusionsoffen, wasserdicht und wasserdampfdurchlässig. Die Membranschicht 4, die der außenseitigen Vliesschicht 2 zugewandt ist, schützt die innenseitige Membranschicht 5 vor schädlichen Umwelteinflüssen, beispielsweise Temperatureinflüssen, UV-Strahlung, Feuchtigkeit und/oder Staub. Die schädlichen Umwelteinflüsse wirken sich beschleunigend auf den Alterungsprozess der Membranschicht 4, 5 aus.

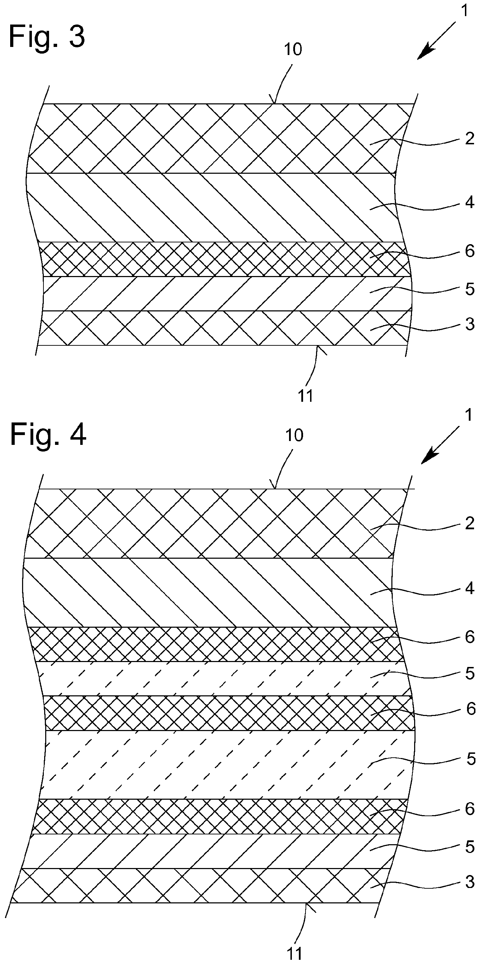

Die Fig. 4 zeigt in einem weiteren Ausführungsbeispiel, dass eine Mehrzahl von Membranschichten 5 zwischen der außenseitigen Vliesschicht 2 und der innenseitigen Vliesschicht 3 vorhanden sind. Die Membranschichten 5 sind jeweils untereinander mittels Trennlagen 6 getrennt und/oder entkoppelt.

Im Übrigen ist in dem dargestellten Ausführungsbeispiel vorgesehen, dass die mikroporöse Membranschicht 4 als polyolefinischen Kunststoff Polypropylen (PP) aufweist. In einem weiteren, nicht dargestellten Ausführungsbeispiel ist vorgesehen, dass Polyethylen (PE) als Material für die mikroporöse Membranschicht 4 verwendet wird.

Gemäß dem Ausführungsbeispiel der Fig. 1 ist vorgesehen, dass die Membranschicht 4, 5 eine Dicke von 100 µm aufweist. In weiteren, nicht dargestellten Ausführungsvarianten weist die Membranschicht 4, 5 eine Dicke im Bereich von 20 bis 200 µm, bevorzugt zwischen 30 und 120 µm, weiter bevorzugt zwischen 35 und 100 µm, auf. Das Flächengewicht der Membranschicht 4, 5 beträgt zwischen 15 und 150 g/m², bevorzugt zwischen 20 und 100 g/m², weiter bevorzugt zwischen 20 und 50 g/m².

Im Übrigen verdeutlicht die Fig. 2, dass die Dicke der Membranschicht 5, die der innenseitigen Vliesschicht 3 zugewandt ist, zweifach so groß wie die Dicke der der außenseitigen Vliesschicht 2 zugewandten Membranschicht 4 ausgeführt ist. Bei weiteren, nicht dargestellten Ausführungsvarianten ist die Dicke der der innenseitigen Vliesschicht 3 zugewandten Membranschicht 5 zwischen 50 % bis 200 %, bevorzugt bis 70 %, weiter bevorzugt weiter bis 85 % und insbesondere zumindest im Wesentlichen bis zu 100 % größer, als die Dicke der der außenseitigen Vliesschicht 2 zugewandten Membranschicht 4 ausgeführt. Dabei versteht es sich letztlich, dass in weiteren, nicht dargestellten Ausführungsformen vorgesehen ist, dass die Dicke der der innenseitigen Vliesschicht 3 zugewandten Membranschicht 5 größer als die der außenseitigen Vliesschicht 2 zugewandten Membranschicht 4 ist.

Des Weiteren stellt die Fig. 3 dar, dass die Dicke der der außenseitigen Vliesschicht 2 zugewandten Membranschicht 4 größer als die Dicke der der innenseitigen Vliesschicht 3 zugewandten Membranschicht 5 ist. Weiter verdeutlicht die Fig. 3, dass die innenseitige Membranschicht 5 halb so dick wie die außenseitige Membranschicht 8 ausgebildet ist. In weiteren, nicht dargestellten Ausführungsformen ist vorgesehen, dass die Dicke der der außenseitigen Vliesschicht 2 zugewandten Membranschicht 4 größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der innenseitigen Vliesschicht 3 zugewandten Membranschicht 5 ist.

Im Übrigen ist es bei den Ausführungsbeispielen gemäß den Fig. 1 bis 4, dass die Flächengewichte der außenseitigen Vliesschicht 2 und der innenseitigen Vliesschicht 3 sich unterscheiden. In dem dargestellten Ausführungsbeispiel gemäß Fig. 1 bis 4 ist vorgesehen, dass die außenseitige Vliesschicht 2 ein Flächengewicht von etwa 70 g/m² aufweist. In weiteren Ausführungsformen, die an dieser Stelle nicht dargestellt sind, ist vorgesehen, dass die außenseitige Vliesschicht 2 ein Flächengewicht zwischen 20 bis 200 g/m², bevorzugt zwischen 30 bis 140 g/m², weiter bevorzugt zwischen 40 bis 100 g/m², weiter bevorzugt weiter zwischen 50 bis 80 g/m², aufweist. In den dargestellten Ausführungsbeispielen gemäß Fig. 1 bis 4 weist die innenseitige Vliesschicht 3 ein geringeres Flächengewicht als die außenseitige Vliesschicht 2 auf. Das Flächengewicht der innenseitigen Vliesschicht 3 beträgt in dem dargestellten Ausführungsbeispiel 20 g/m². In weiteren Ausführungsformen ist vorgesehen, dass die innenseitige Vliesschicht 3 ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist.

In den dargestellten Ausführungsbeispielen weist die Trennlage 6 die gleiche Dicke wie die innenseitige Vliesschicht 3 auf. Darüber hinaus weist die Trennlage 6 ein ähnliches Flächengewicht wie die innenseitige Vliesschicht 3 auf. Das Flächengewicht der Trennlage 6 beträgt in dem dargestellten Ausführungsbeispiel 20 g/m². In weiteren Ausgestaltungsvarianten der Unterdachbahn 1 ist vorgesehen, dass die Trennlage 6 ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist. In den dargestellten Ausführungsformen ist die Trennlage 6 als Vliesschicht ausgebildet.

Im Übrigen ist die Unterdachbahn 1 selektiv permeabel ausgebildet, so dass sie in dem dargestellten Ausführungsbeispiel sowohl wasserdicht als auch wasserdampfdurchlässig ist. Die Unterdachbahn 1 weist eine Wasserdichtigkeit bei einer Wassersäule zwischen 0,8 bis 40 m auf. In dem dargestellten Ausführungsbeispiel weist sie eine Wasserdichtigkeit bei einer Wassersäule von 15 m auf. In weiteren Ausführungsformen ist bevorzugt vorgesehen, dass die Unterdachbahn 1 eine Wasserdichtigkeit aufweist, die einer Wassersäule zwischen 0,9 bis 30 m, weiter bevorzugt zwischen 1 bis 20 m, standhält. Die Unterdachbahn 1 weist in den dargestellten Ausführungsformen jedoch nicht nur eine Wasserdichtigkeit auf, sondern auch eine Wasserdampfdurchlässigkeit, die anhand der wasserdampfdiffusions-äquivalenten Luftschutzdicke charakterisiert wird. In dem dargestellten Ausführungsbeispiel ist die wasserdampfdiffusionsäquivalente Luftschutzdicke (s_{d}-Wert) etwa 5 cm. In weiteren Ausführungsformen kann vorgesehen sein, dass der s_{d}-Wert zwischen 0,01 bis 1 m, bevorzugt zwischen 0,02 bis 0,5 m, weiter bevorzugt zwischen 0,03 bis 0,3 m, variiert.

Sowohl die Vliesschicht 2, 3 als auch die Trennlage 6 weisen in der dargestellten Ausführungsform einen thermoplastischen Kunststoff auf. Als thermoplastischer Kunststoff ist Polyester (PS) vorgesehen. In weiteren Ausführungsformen ist auch die Verwendung von Polyethylen (PE), Polypropylen (PP) und/oder Polyethylenterephthalat (PET) vorgesehen. Dabei versteht es sich letztlich, dass die Vliesschicht 2, 3 und/oder die Trennlage 6 auch aus dem thermoplastischen Kunststoff bestehen kann.

Nicht dargestellt ist, dass die Membranschicht 4, 5 mit der innenseitigen Vliesschicht 3 und/oder mit der außenseitigen Vliesschicht 2 durch Ultraschallschweißen verbunden sein kann. Beim Ultraschallschweißen erfolgt bevorzugt die Verwendung von punktuellen Schweißpunkten. Neben dem Ultraschallschweißen ist auch als Verfahren zur Verbindung das Kleben, insbesondere über eine punktuelle teilflächige Verklebung, und/oder das Wärmekalandrieren möglich.

Weiter nicht dargestellt ist, dass die unmittelbar benachbarten Membranschichten 4, 5 untereinander über Trennlagen 6 mittels Ultraschallschweißen, insbesondere mit punktuellen Schweißpunkten, verbunden sind. Neben dem Ultraschallschweißen ist analog zur Verbindung der Membranschichten 4, 5 mit der Vliesschicht 2, 3 vorgesehen, dass als Verbindungsverfahren Kleben und/oder Wärmekalandrieren verwendet werden können. Beim Kleben wird bevorzugt eine punktuelle teilflächige Verklebung genutzt.

Insbesondere kann beim Kleben die als, insbesondere fadenförmig, faserförmig und/oder rasterförmig aufgebrachter und/oder applizierter, Klebstoff ausgebildete Trennlage 6 als Klebeschicht selbst verwendet werden.

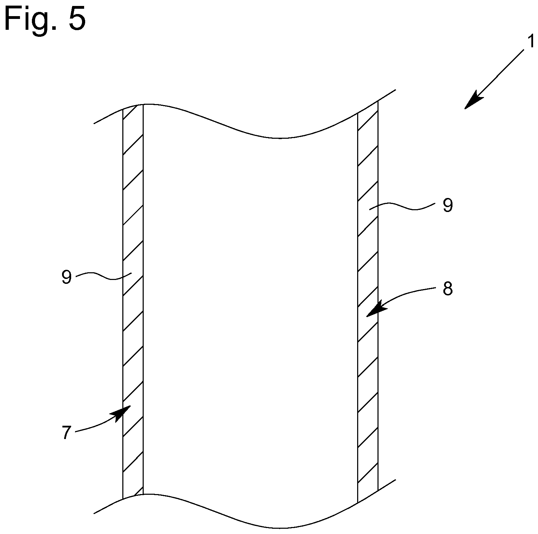

Aus Fig. 5 ergibt sich, dass die Unterdachbahn 1 an jedem der Längsränder 7, 8 einen Klebebereich 9 aufweist. Die beiden Klebebereiche befinden sich dabei auf der gleichen Seite der Unterdachbahn 1. Dieser Klebebereich 9 dient bei Verwendung der Unterdachbahn 1 als Unterspannbahn und/oder Unterdeckbahn auf einer Dachkonstruktion zur späteren Verbindung der Unterdachbahnen 1 untereinander. Der Klebebereich 9 kann dabei sowohl auf der Außenseite 10 der Unterdachbahn 1 vorgesehen sein als auch auf der Innenseite 11 der Unterdachbahn 1. Bevorzugt wird in einem nicht dargestellten Ausführungsbeispiel bei der Verwendung der Unterdachbahn 1 als Unterspannbahn und/oder Unterdeckbahn vorgesehen, dass die einzelnen Unterdachbahnen 1 über eine "Kleber-in-Kleber"-Verbindung verbunden werden. Bei dieser Verbindung werden lediglich die Klebebereiche 9 zur wasserdichten Verbindung der Unterdachbahnen 1 genutzt.

Nicht dargestellt ist, dass der Klebebereich 9 bevorzugt mit einem Liner, beispielsweise silikoniertes Papier, abgedeckt werden kann. Der Klebebereich 9 kann neben einen gemäß Fig. 5 dargestellten vollflächigen Auftrag auch einen teilflächigen oder punktuellen Auftrag längsrandseitig auf der Unterdachbahn 1 bzw. auf der Außenseite 10 und/oder auf der Innenseite 11 der Unterdachbahn 1 vorsehen. In dem dargestellten Ausführungsbeispiel beträgt die Breite des Klebebereichs 9 etwa 5 cm. In weiteren, nicht dargestellten Ausführungsformen ist insbesondere vorgesehen, dass die Breite des Klebebereichs 9 zwischen 3 bis 10 cm variiert.

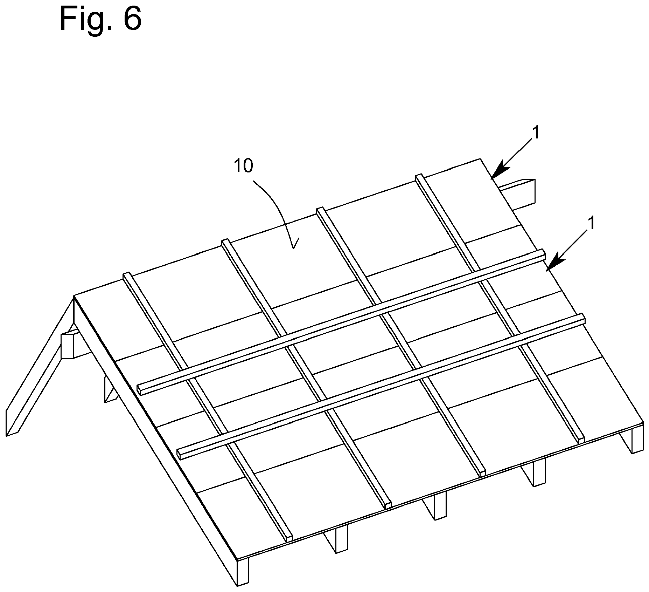

Darüber hinaus zeigt die Fig. 6 die Verwendung der Unterdachbahn 1 als Unterspannbahn. Dabei wird die Unterdachbahn 1 auf eine Dachkonstruktion aufgebracht. Die einzelnen Unterdachbahnen 1 verbinden sich über die vorgesehenen Klebebereiche 9 wasserdicht miteinander. Die Außenseite 10 der Unterdachbahn 1 ist dabei der Bewitterung zugewandt und die Innenseite 11 der Unterdachbahn 1 ist dem Dachstuhl zugewandt.

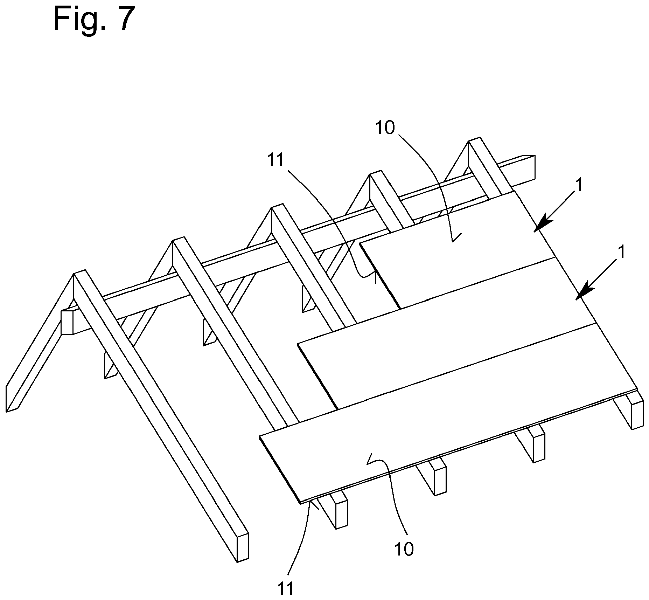

Ferner verdeutlicht Fig. 7 die Anordnung der Unterdachbahn 1 auf einer Dachkonstruktion, wobei die Innenseite 11 der Unterdachbahn 1 der Dachkonstruktion zugewandt ist.

Des Weiteren ist ein Verfahren zur Herstellung einer Unterdachbahn 1 vorgesehen, wobei die Unterdachbahn 1 gemäß Fig. 1 eine außenseitige Vliesschicht 2 und eine innenseitige Vliesschicht 3 aufweist. Zwischen der außenseitigen Vliesschicht 2 und der innenseitigen Vliesschicht 3 ist eine mikroporöse Membranschicht 4 auf Basis polyolefinischer Kunststoffe eingebracht. Zusätzlich wird eine weitere mikroporöse Membranschicht 5 auf polyolefinischer Kunststoffbasis zwischen der außenseitigen Vliesschicht 2 und der innenseitigen Vliesschicht 3 eingebracht. Die Membranschichten 4, 5 werden untereinander durch eine Trennlage 6 getrennt bzw. entkoppelt.

Im Übrigen ist in einem nicht dargestellten Ausführungsbeispiel des Verfahrens vorgesehen, dass benachbarte Membranschichten 4, 5 untereinander über Trennlagen 6 mittels Ultraschallschweißen und/oder Kleben und/oder Wärmekalandrieren verbunden werden. Bei dem Ultraschallschweißen ist dabei bevorzugt die Verwendung von punktuellen teilflächigen Schweißpunkten vorgesehen. Bei der Verfahrensausgestaltung der Verklebung der Membranschichten 4, 5 mit der Trennlage 6 ist eine teilflächige punktuelle Verklebung vorgesehen. Als Klebemittel bzw. Klebstoff zur stoffschlüssigen Verbindung der einzelnen Schichten ist ein Schmelzklebstoff und/oder Dispersionsklebstoff in einem nicht dargestellten Ausführungsbeispiel vorgesehen. Das Ultraschallschweißen wird bevorzugt mittels Sonotroden durchgeführt, die einzelne punktuelle Schweißungen gewährleisten.

Der Klebstoff selbst kann als Trennlage 6 in einer weiteren Ausführungsform vorgesehen sein, wobei die Trennlage 6 als Klebeschicht die Membranschichten 4, 5 fest miteinander verbindet.

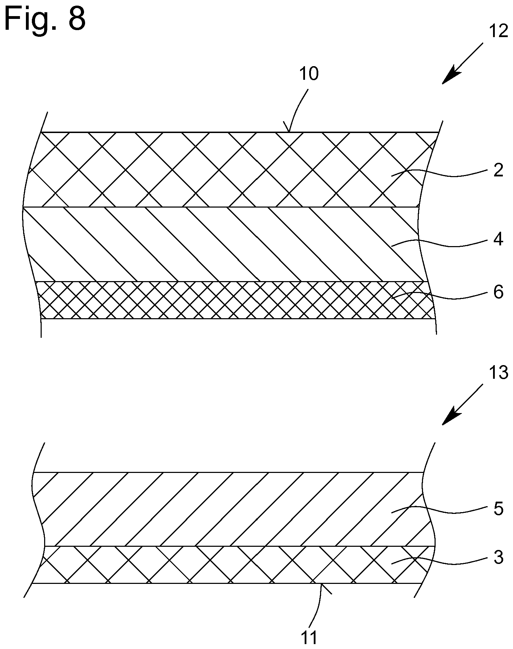

Schematisch ist in Fig. 8 verdeutlicht, dass in einer Ausführungsvariante des Verfahrens zuerst ein wenigstens dreischichtiger Aufbau 12 aus einer außenseitigen Vliesschicht 2, einer Membranschicht 4und einer Trennlage 6 hergestellt wird. Bei der Herstellung des dreischichtigen Aufbaus 12 wird in einer weiteren Ausführungsform die Verbindung der einzelnen Schichten durch Kalandrieren und/oder Ultraschallschweißen hergestellt. Darüber hinaus ist neben der Herstellung des wenigstens dreischichtigen Aufbaus 12 die Herstellung eines wenigstens zweischichtigen Aufbaus 13 vorgesehen, wobei der wenigstens zweischichtige Aufbau 13 eine Membranschicht 5 und eine innenseitige Vliesschicht 3 aufweist. Der wenigstens zweischichtige Aufbau 13 wird bevorzugt bei einer weiteren Ausführungsform durch eine punktuelle teilflächige und/oder vollflächige Verklebung hergestellt. Der wenigstens dreischichtige Aufbau 12 wird mit dem wenigstens zweischichtigen Aufbau 13 verbunden, wobei bevorzugt zur Verbindung eine punktuelle teilflächige und/oder vollflächige Verklebung dient. Nach Verbund des wenigstens dreischichtigen Aufbaus 12 mit dem wenigstens zweischichtigen Aufbau 13 entsteht die Unterdachbahn 1. Bei der Verbindung des wenigstens zweischichtigen Aufbaus 13 mit dem wenigstens dreischichtigen Aufbau 12 wird die Trennlage 6 des wenigstens dreischichtigen Aufbaus 12 mit der Membranschicht 5 des wenigstens zweischichtigen Aufbaus 13 verbunden. Dabei versteht es sich, dass in weiteren, nicht dargestellten Ausführungsvarianten des Verfahrens unterschiedliche Verbindungsverfahren der einzelnen Schichten vorgesehen sein können. Letztlich kann in einem Verfahrensschritt die Verbindung aller Schichten zu einer Unterdachbahn 1 durchgeführt werden oder es werden einzelne Schichtaufbauten 12, 13 mittels unterschiedlicher Verbindungstechniken hergestellt.

### Bezugszeichenliste:

- 1: Unterdachbahn
- 2: außenseitige Vliesschicht
- 3: innenseitige Vliesschicht
- 4: mikroporöse Membranschicht
- 5: weitere Membranschicht
- 6: Trennlage
- 7: Längsrand
- 8: Längsrand
- 9: Klebebereich
- 10: Außenseite Unterdachbahn
- 11: Innenseite Unterdachbahn
- 12: dreischichtiger Aufbau
- 13: zweischichtiger Aufbau

## Patentansprüche

1. Unterdachbahn (1), insbesondere vorgesehen zur Verwendung als Unterdeckbahn und/oder Unterspannbahn, mit wenigstens einer außenseitigen Vliesschicht (2), wenigstens einer innenseitigen Vliesschicht (3) und wenigstens einer mikroporösen Membranschicht (4) auf Basis wenigstens eines polyolefinischen Kunststoffes, wobei die Membranschicht (4) zwischen der außenseitigen Vliesschicht (2) und der innenseitigen Vliesschicht (3) angeordnet ist,
**dadurch gekennzeichnet,**
**dass** wenigstens eine weitere mikroporöse Membranschicht (5) auf polyolefinischer Kunststoffbasis zwischen der außenseitigen Vliesschicht (2) und der innenseitigen Vliesschicht (3) vorgesehen ist und dass die weitere Membranschicht (5) von der Membranschicht (4) durch eine Trennlage (6) getrennt ist, wobei die Trennlage (6) wasserflüssigkeitsdurchlässig ist und/oder als Gebilde aus Fasern, insbesondere Vlies, ausgebildet ist.

2. Unterdachbahn nach Anspruch 1, **dadurch gekennzeichnet, dass** eine Mehrzahl weiterer Membranschichten (5) vorgesehen ist, wobei benachbarte weitere Membranschichten (5) jeweils durch eine weitere Trennlage (6) voneinander getrennt sind.

3. Unterdachbahn nach Anspruch 1 oder 2, **dadurch gekennzeichnet, dass** die Membranschicht (4, 5) ein Material auf Basis von Polypropylen (PP) und/oder Polyethylen (PE) aufweist.

4. Unterdachbahn nach einem der vorhergehenden Ansprüche, **dadurch gekennzeichnet, dass** die Membranschicht (4, 5) eine Dicke im Bereich von 20 bis 200 µm, bevorzugt zwischen 30 und 120 µm, weiter bevorzugt zwischen 35 und 100 µm, aufweist.

5. Unterdachbahn nach einem der vorhergehenden Ansprüche, **dadurch gekennzeichnet, dass** die Membranschicht (4, 5) ein Flächengewicht zwischen 15 und 150 g/m², bevorzugt zwischen 20 und 100 g/m², weiter bevorzugt zwischen 20 und 50 g/m², aufweist.

6. Unterdachbahn nach einem der vorhergehenden Ansprüche, **dadurch gekennzeichnet, dass** die Dicke der der außenseitigen Vliesschicht (2) zugewandten Membranschicht (4) größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der innenseitigen Vliesschicht (3) zugewandten Membranschicht (5) ausgebildet ist.

7. Unterdachbahn nach einem der vorhergehenden Ansprüche, **dadurch gekennzeichnet, dass** die Dicke der der innenseitigen Vliesschicht (3) zugewandten Membranschicht (5) größer, bevorzugt zwischen 50 % bis 200 %, weiter bevorzugt bis 70 %, weiter bevorzugt weiter bis 85 % und insbesondere zumindest im Wesentlichen bis zu 100 %, als die Dicke der der außenseitigen Vliesschicht (2) zugewandten Membranschicht (4) ausgebildet ist.

8. Unterdachbahn nach einem der vorhergehenden Ansprüche, **dadurch gekennzeichnet, dass** die außenseitige Vliesschicht (2) ein Flächengewicht zwischen 20 bis 200 g/m², bevorzugt zwischen 30 bis 140 g/m², weiter bevorzugt zwischen 40 bis 100 g/m², weiter bevorzugt weiter zwischen 50 bis 80 g/m² und insbesondere zumindest im Wesentlichen kleiner oder gleich 70 g/m², aufweist.

9. Unterdachbahn nach einem der vorhergehenden Ansprüche, **dadurch gekennzeichnet, dass** die innenseitige Vliesschicht (3) ein Flächengewicht zwischen 1 bis 150 g/m², bevorzugt zwischen 5 bis 100 g/m², weiter bevorzugt zwischen 10 bis 50 g/m² und insbesondere zumindest im Wesentlichen kleiner oder gleich 20 g/m², aufweist.

10. Unterdachbahn nach einem der vorhergehenden Ansprüche, **dadurch gekennzeichnet, dass** die Trennlage (6) als Vliesschicht, insbesondere perforierter und/oder offenporiger, Schaum, vorzugsweise als Schaumschicht, Gelege, Gewebe und/oder, insbesondere fadenförmig, faserförmig und/oder rasterförmig aufgebrachter und/oder applizierter, Klebstoff ausgebildet ist und dass, vorzugsweise, die Trennlage (6) ein Flächengewicht zwischen 1 bis 150 g/m², bevorzugt zwischen 50 bis 100 g/m², weiter bevorzugt zwischen 10 bis 50 g/m² und insbesondere zumindest im Wesentlichen kleiner oder gleich 20 g/m², aufweist.

11. Unterdachbahn nach einem der vorhergehenden Ansprüche, **dadurch gekennzeichnet, dass** die Unterdachbahn (1) selektiv permeabel ausgebildet, insbesondere wasserdicht, vorzugsweise mit einer Wassersäule zwischen 0,8 bis 40 m, bevorzugt zwischen 0,9 bis 30 m, weiter bevorzugt zwischen 1 bis 20 m, und/oder wasserdampfdurchlässig.

12. Unterdachbahn nach einem der vorhergehenden Ansprüche, **dadurch gekennzeichnet, dass** eine wasserdampfdiffusionsäquivalente Luftschichtdicke (s_{d}-Wert) der Unterdachbahn (1) zwischen 0,01 bis 1 m, bevorzugt zwischen 0,02 bis 0,5 m, weiter bevorzugt zwischen 0,03 bis 0,3 m und insbesondere zumindest im Wesentlichen kleiner oder gleich 5 cm, vorgesehen ist.

13. Unterdachbahn nach einem der vorhergehenden Ansprüche, **dadurch gekennzeichnet, dass** die Vliesschicht (2, 3) und/oder die Trennlage (6) einen, bevorzugt thermoplastischen, Kunststoff, insbesondere Polyester (PES), Polyethylen (PE), Polypropylen (PP) und/oder Polyethylenterephthalat (PET), aufweist, insbesondere aus einem solchen besteht.

14. Unterdachbahn nach einem der vorhergehenden Ansprüche, **dadurch gekennzeichnet, dass** die Membranschichten (4, 5) mit der innenseitigen (3) und/oder außenseitigen Vliesschicht (2) durch Ultraschallschweißen, insbesondere mit punktuellen Schweißpunkten, und/oder Kleben, insbesondere über punktuelle teilflächige Verklebung, und/oder Wärmekalandrieren verbunden sind.

15. Unterdachbahn nach einem der vorhergehenden Ansprüche, **dadurch gekennzeichnet, dass** unmittelbar benachbarte Membranschichten (4, 5) untereinander über Trennlagen (6) mittels Ultraschallschweißen, insbesondere mit punktuellen Schweißpunkten, und/oder mittels Kleben, insbesondere über punktuelle teilflächige Verklebung, und/oder mittels Wärmekalandrieren verbunden sind.

16. Unterdachbahn nach einem der vorhergehenden Ansprüche, **dadurch gekennzeichnet, dass** an wenigstens einem Rand unter- und/oder oberseitig ein Klebebereich (9) vorgesehen ist.

17. Verwendung einer Unterdachbahn (1) nach einem der vorhergehenden Ansprüche als Unterdeckbahn und/oder als Unterspannbahn.

18. Verfahren zur Herstellung einer Unterdachbahn (1) nach einem der vorhergehenden Ansprüche mit wenigstens einer außenseitigen Vliesschicht (2), mit wenigstens einer innenseitigen Vliesschicht (3) und mit wenigstens einer mikroporösen Membranschicht (4) auf Basis polyolefinischer Kunststoffe, wobei die Membranschicht (4) zwischen der außenseitigen Vliesschicht (2) und der innenseitigen Vliesschicht (3) angeordnet wird,
**dadurch gekennzeichnet,**
**dass** wenigstens eine weitere mikroporöse Membranschicht (5) auf polyolefinischer Kunststoffbasis zwischen der außenseitigen Vliesschicht (2) und der innenseitigen Vliesschicht (3) eingebracht wird und dass die weitere Membranschicht (5) von der Membranschicht (4) durch eine Trennlage (6) getrennt wird, wobei die Trennlage (6) wasserflüssigkeitsdurchlässig ist und/oder als Gebilde aus Fasern, insbesondere Vlies, ausgebildet ist.

19. Verfahren nach Anspruch 18, **dadurch gekennzeichnet, dass** unmittelbar benachbarte Membranschichten (4, 5) untereinander über Trennlagen (6) mittels Ultraschallschweißen, insbesondere über punktuelle teilflächige Schweißpunkte, und/oder Kleben, insbesondere über punktuelle teilflächige Verklebung, und/oder Wärmekalandrieren miteinander verbunden werden.

20. Verfahren nach Anspruch 18 oder 19, **dadurch gekennzeichnet, dass** zuerst ein wenigstens dreischichtiger Aufbau (12) mit einer außenseitigen Vliesschicht (2), einer Membranschicht (4) und einer Trennlage (6), insbesondere durch Kalandrieren und/oder Ultraschallschweißen, und ein eine innenseitige Vliesschicht (3) und eine Membranschicht (5) aufweisender wenigstens zweischichtiger Aufbau (13), insbesondere mittels Ultraschallschweißen, hergestellt werden und dass anschließend der wenigstens zweischichtige Aufbau (13) mit dem wenigstens dreischichtigen Aufbau (12) verbunden wird, insbesondere durch eine punktuelle teilflächige und/oder vollflächige Verklebung, wobei die Membranschicht (5) des wenigstens zweischichtigen Aufbaus (13) der Trennlage (6) des wenigstens dreischichtigen Aufbaus (12) zugewandt ist.

21. Verfahren nach einem der vorhergehenden Ansprüche, **dadurch gekennzeichnet, dass** das Ultraschallschweißen mittels Sonotroden durchgeführt wird.

## Claims

1. A roofing underlay (1), in particular intended for use as a roof cladding underlay and/or roof lining membrane, comprising at least one outside non-woven layer (2), at least one inside non-woven layer (3) and at least one microporous membrane layer (4) based on at least one polyolefinic plastic, wherein the membrane layer (4) is arranged between the outside non-woven layer (2) and the inside non-woven layer (3),
**characterised in that**
at least one further polyolefinic-plastic-based, microporous membrane layer (5) is provided between the outside non-woven layer (2) and the inside non-woven layer (3) and that the further membrane layer (5) is separated from the membrane layer (4) by a separating layer (6), wherein the separating layer (6) designed to be permeable to liquid water and/or as a fabric of fibres, in particular non-woven fabric.

2. The roofing underlay according to claim 1, **characterised in that** a plurality of further membrane layers (5) is provided, wherein adjacent further membrane layers (5) in each case are separated from each other by a further separating layer (6).

3. The roofing underlay according to claim 1 or 2, **characterised in that** the membrane layer (4, 5) comprises a material based on polypropylene (PP) and/or polyethylene (PE).

4. The roofing underlay according to one of the preceding claims, **characterised in that** the membrane layer (4, 5) has a thickness in the range of 20 to 200 µm, preferably between 30 and 120 µm, and more preferably between 35 and 100 µm.

5. The roofing underlay according to one of the preceding claims, **characterised in that** the membrane layer (4, 5) has a weight per unit area between 15 and 150 g/m², preferably between 20 and 100 g/m², and more preferably between 20 and 50 g/m².

6. The roofing underlay according to one of the preceding claims, **characterised in that** the thickness of the membrane layer (4) facing the outside non-woven layer (2) is designed to be larger, preferably between 50% and 200%, more preferably up to 70%, more preferably still up to 85% and in particular at least substantially up to 100%, than the thickness of the membrane layer (5) facing the inside non-woven layer (3).

7. The roofing underlay according to one of the preceding claims, **characterised in that** the thickness of the membrane layer (5) facing the inside non-woven layer (3) is designed to be larger, preferably between 50% and 200%, more preferably up to 70%, more preferably still up to 85% and in particular at least substantially up to 100%, than the thickness of the membrane layer (4) facing the outside non-woven layer (2).

8. The roofing underlay according to one of the preceding claims, **characterised in that** the outside non-woven layer (2) has a weight per unit area of between 20 and 200 g/m², preferably between 30 and 140 g/m², more preferably between 40 and 100 g/m², more preferably still between 50 and 80 g/m² and in particular at least substantially less than or equal to 70 g/m².

9. The roofing underlay according to one of the preceding claims, **characterised in that** the inside non-woven layer (3) has a weight per unit area of between 1 and 150 g/m², preferably between 5 and 100 g/m², more preferably between 10 and 50 g/m² and in particular at least substantially less than or equal to 20 g/m².

10. The roofing underlay according to one of the preceding claims, **characterised in that** the separating layer (6) is designed as a non-woven layer, in particular a perforated and/or porous foam, preferably as a foam layer, laid scrim, woven fabric and/or adhesive applied in an in particular thread-like, fibrous and/or grid-like manner, and that, preferably, the separating layer (6) has a weight per unit area of between 1 and 150 g/m², preferably between 50 and 100 g/m², more preferably between 10 and 50 g/m² and in particular, at least substantially less than or equal to 20 g/m².

11. The roofing underlay according to one of the preceding claims, **characterised in that** the roofing underlay (1) is designed to be selectively permeable, in particular waterproof, preferably having a water column between 0.8 and 40 m, preferably between 0.9 and 30 m, more preferably between 1 and 20 m, and/or permeable to water vapour.

12. The roofing underlay according to one of the preceding claims, **characterised in that** a water vapour diffusion equivalent air layer thickness (S_{d} value) of the roofing underlay (1) is provided between 0.01 and 1 m, preferably between 0.02 and 0.5 m, more preferably between 0.03 and 0.3 m and in particular at least substantially less than or equal to 5 cm.

13. The roofing underlay according to one of the preceding claims, **characterised in that** the non-woven layer (2, 3) and/or the separating layer (6) comprises a preferably thermoplastic plastic, in particular polyester (PES), polyethylene (PE), polypropylene (PP) and/or polyethylene terephthalate (PET) and in particular, consists of such.

14. The roofing underlay according to one of the preceding claims, **characterised in that** the membrane layers (4, 5) are connected to the inside non-woven layer (3) and/or outside non-woven layer (2) by means of ultrasonic welding, in particular using punctiform spot welds and/or adhesive bonding, in particular by punctiform, partial-area adhesion, and/or heat calendering.

15. The roofing underlay according to one of the preceding claims, **characterised in that** immediately adjacent membrane layers (4, 5) are connected to one another via separating layers (6) by means of ultrasonic welding, in particular using punctiform spot welds, and/or by means of adhesive bonding, in particular by punctiform, partial-area adhesion, and/or heat calendering.

16. The roofing underlay according to one of the preceding claims, **characterised in that** an adhesive region (9) is provided on the underside and/or upper side of at least one edge.

17. Use of a roofing underlay (1) according to one of the preceding claims as a roof cladding underlay and/or roof lining membrane.

18. A method for producing a roofing underlay (1) according to one of the preceding claims, comprising at least one outside non-woven layer (2), at least one inside non-woven layer (3) and at least one microporous membrane layer (4) based on polyolefinic plastics, wherein the membrane layer (4) is arranged between the outside non-woven layer (2) and the inside non-woven layer (3),
**characterised in that**
at least one further microporous membrane layer (5) based on polyolefinic plastic is introduced between the outside non-woven layer (2) and the inside non-woven layer (3) and that the further membrane layer (5) is separated from the membrane layer (4) by a separating layer (6), wherein the separating layer (6) is designed to be permeable to liquid water and/or as a fabric of fibres, in particular non-woven fabric.

19. The method according to claim 18, **characterised in that** immediately adjacent membrane layers (4, 5) are connected to one another via separating layers (6) by means of ultrasonic welding, in particular via punctiform, partial-area spot welds and/or adhesive bonding, in particular via punctiform, partial-area adhesion, and/or heat calendering.

20. The method according to claim 18 or 19, **characterised in that** first an at least three-layer structure (12) comprising an outside non-woven layer (2), a membrane layer (4) and a separating layer (6) is produced, in particular by calendering and/or ultrasonic welding, and an at least two-layer structure (13) comprising an inside non-woven layer (3) and a membrane layer (5) is produced, in particular by means of ultrasonic welding, and that then the at least two-layer structure (13) is connected to the at least three-layer structure (12), in particular by punctiform, partial-area and/or full-area adhesion, wherein the membrane layer (5) of the at least two-layer structure (13) faces the separating layer (6) of the at least three-layer structure (12).

21. The method according to one of the preceding claims, **characterised in that** the ultrasonic welding is carried out using sonotrodes.

## Revendications

1. Membrane de sous-toiture (1), destinée en particulier à s'utiliser comme bande sous-tuile et/ou de revêtement intérieur de toit, comprenant au moins une couche de non-tissé extérieure (2), au moins une couche de non-tissé intérieure (3) et au moins une couche de membrane microporeuse (4) à base d'au moins une matière plastique polyoléfinique, la couche de membrane (4) étant agencée entre la couche de non-tissée extérieure (2) et la couche de non-tissée intérieure (3),
**caractérisée en ce**
**qu'**au moins une autre couche de membrane microporeuse (5) à base de matière plastique polyoléfinique est disposée entre la couche de non-tissé extérieure (2) et la couche de non-tissé intérieure (3) et **en ce que** l'autre couche de membrane (5) est séparée de la couche de membrane (4) par une couche de séparation (6), la couche de séparation (6) étant perméable à l'eau et/ou étant conçue sous forme de structure en fibres, en particulier en non-tissé.

2. Membrane de sous-toiture selon la revendication 1, **caractérisée en ce qu'**une pluralité d'autres couches de membrane (5) est prévue, d'autres couches de membrane adjacentes (5) étant respectivement séparées les unes des autres par une autre couche de séparation (6).

3. Membrane de sous-toiture selon la revendication 1 ou 2, **caractérisée en ce que** la couche de membrane (4, 5) comprend un matériau à base de polypropylène (PP) et/ou de polyéthylène (PE).

4. Membrane de sous-toiture selon l'une des revendications précédentes, **caractérisée en ce que** la couche de membrane (4, 5) a une épaisseur dans la plage allant de 20 à 200 µm, de préférence de 30 à 120 µm, plus préférentiellement de 35 à 100 µm.

5. Membrane de sous-toiture selon l'une quelconque des revendications précédentes, **caractérisée en ce que** la couche de membrane (4, 5) a une masse surfacique comprise entre 15 et 150 g/m², de préférence entre 20 et 100 g/m², plus préférentiellement entre 20 et 50 g/m².

6. Membrane de sous-toiture selon l'une quelconque des revendications précédentes, **caractérisée en ce que** l'épaisseur de la couche de membrane (4) faisant face à la couche de non-tissé extérieure (2) est supérieure, de préférence entre 50 % et 200 %, plus préférablement jusqu'à 70 %, plus préférablement encore jusqu'à 85 % et en particulier au moins sensiblement jusqu'à 100 %, à l'épaisseur de la couche de membrane (5) faisant face à la couche de non-tissé intérieure (3).

7. Membrane de sous-toiture selon l'une quelconque des revendications précédentes, **caractérisée en ce que** l'épaisseur de la couche de membrane (5) faisant face à la couche de non-tissé intérieure (3) est supérieure, de préférence comprise entre 50 % et 200 %, plus préférablement jusqu'à 70 %, plus préférablement encore jusqu'à 85 % et en particulier au moins sensiblement jusqu'à 100 % à l'épaisseur de la couche de membrane (4) faisant face à la couche de non-tissé extérieure (2).

8. Membrane de sous-toiture selon l'une quelconque des revendications précédentes, **caractérisée en ce que** la couche de non-tissé extérieure (2) présente une masse surfacique comprise entre 20 et 200 g/m², de préférence entre 30 et 140 g/m², plus préférablement entre 40 et 100 g/m², plus préférablement encore entre 50 et 80 g/m² et en particulier au moins sensiblement inférieure ou égale à 70 g/m².

9. Membrane de sous-toiture selon l'une quelconque des revendications précédentes, **caractérisée en ce que** la couche de non-tissé intérieure (3) présente une masse surfacique comprise entre 1 et 150 g/m² de préférence entre 5 et 100 g/m², plus préférentiellement entre 10 et 50 g/m² et en particulier au moins sensiblement inférieure ou égale à 20 g/m².

10. Membrane de sous-toiture selon l'une quelconque des revendications précédentes, **caractérisée en ce que** la couche de séparation (6) est conçue sous la forme d'une couche de non-tissé, en particulier de mousse perforée et/ou poreuse, de préférence de couche de mousse, de canevas, de tissu et/ou de plastique appliqué et/ou disposé sous forme de fil, de fibre et/ou de grille, et **en ce que**, de préférence, la couche de séparation (6) présente une masse surfacique comprise entre 1 et 150 g/m², de préférence entre 50 et 100 g/m², plus préférablement entre 10 et 50 g/m² et en particulier au moins sensiblement inférieure ou égale à 20 g/m².

11. Membrane de sous-toiture selon l'une quelconque des revendications précédentes, **caractérisée en ce que** la membrane de sous-toiture (1) est sélectivement perméable, en particulier imperméable, de préférence ayant une colonne d'eau comprise entre 0,8 et 40 m, de manière davantage préférée entre 0,9 et 30 m, plus préférablement entre 1 et 20 m et/ou perméable à la vapeur d'eau.

12. Membrane de sous-toiture selon l'une quelconque des revendications précédentes, **caractérisée en ce qu'**une épaisseur de couche d'air équivalente à la diffusion de vapeur d'eau (valeur S_{d}) de la membrane de sous-toiture (1) est comprise entre 0,01 et 1 m, de préférence entre 0,02 et 0,5 m, de préférence encore entre 0,03 et 0,3 m et en particulier au moins sensiblement inférieure ou égale à 5 cm.

13. Membrane de sous-toiture selon l'une quelconque des revendications précédentes, **caractérisée en ce que** la couche de non-tissé (2, 3) et/ou la couche de séparation (6) comprend une matière plastique, de préférence thermoplastique, en particulier du polyester (PES), du polyéthylène (PE), du polypropylène (PP) et/ou du polyéthylène téréphtalate (PET), en particulier constitué par un tel composé.

14. Membrane de sous-toiture selon l'une quelconque des revendications précédentes, **caractérisée en ce que** les couches de membrane (4, 5) sont reliées à la couche de non-tissé intérieure (3) et/ou extérieure (2) par soudage par ultrasons, en particulier au moyen de soudures ponctuelles, et/ou par collage, en particulier par collage partiel ponctuel, et/ou par calandrage à chaud.

15. Membrane de sous-toiture selon l'une quelconque des revendications précédentes, **caractérisée en ce que** les couches de membrane (4, 5) immédiatement adjacentes sont reliées entre elles par les couches de séparation (6) par soudage par ultrasons, en particulier par soudures ponctuelles et/ou par collage, en particulier par collage partiel ponctuel et/ou par calandrage à chaud.

16. Membrane de sous-toiture selon l'une quelconque des revendications précédentes, **caractérisée en ce qu'**une région adhésive (9) est disposée sur au moins un bord inférieur et/ou supérieur.

17. Utilisation d'une membrane de sous-toiture (1) selon l'une des revendications précédentes en tant que bande sous-tuile et/ou de revêtement intérieur de toit.

18. Procédé de fabrication d'une membrane de sous-toiture (1) selon l'une quelconque des revendications précédentes, comportant au moins une couche de non-tissé extérieure (2), au moins une couche de non-tissé intérieure (3) et au moins une couche de membrane microporeuse (4) à base de matière plastique polyoléfinique, la couche de membrane (4) étant disposée entre la couche de non-tissé extérieure (2) et la couche de non-tissé intérieure (3),
**caractérisé en ce**
**qu'**au moins une autre couche de membrane microporeuse (5) à base de matière plastique polyoléfinique est insérée entre la couche de non-tissé extérieure (2) et la couche de non-tissé intérieure (3) et **en ce que** l'autre couche de membrane (5) est séparée de la couche de membrane (4) par une couche de séparation (6), la couche de séparation (6) étant perméable à l'eau liquide et/ou conçue sous la forme d'une structure en fibre, en particulier en non-tissé.

19. Procédé selon la revendication 18, **caractérisé en ce que** les couches de membrane (4, 5) immédiatement adjacentes sont reliées entre elles par des couches de séparation (6) au moyen d'un soudage par ultrasons, en particulier de soudures partielles ponctuelles, et/ou par collage, en particulier par collage partiel ponctuel et/ou par calandrage à chaud.

20. Procédé selon la revendication 18 ou 19, **caractérisé en ce qu'**on fabrique d'abord au moins une structure à trois couches (12) comportant une couche de non-tissé extérieure (2), une couche de membrane (4) et une couche de séparation (6), en particulier par calandrage à chaud et/ou par soudage par ultrasons, et une structure à deux couches (13) présentant au moins une couche de non-tissé intérieure (3) et une couche de membrane (5), en particulier par soudage par ultrasons et **en ce qu'**en suite, ladite structure à deux couches (13) est reliée à ladite structure à trois couches (12), en particulier par un collage ponctuel partiel et/ou total, la couche de membrane (5) de ladite structure à deux couches (13) faisant face à la couche de séparation (6) de ladite structure à trois couches (12).

21. Procédé selon l'une quelconque des revendications précédentes, **caractérisé en ce que** le soudage par ultrasons est effectué au moyen de sonotrodes.
